# EUROPÄISCHE PATENTSCHRIFT

(11) **EP 0 770 823 B1**
(45) Veröffentlichungstag und Bekanntmachung des Hinweises auf die Patenterteilung: **22.05.2002**
(21) Anmeldenummer: 96117011.5
(22) Anmeldetag: 23.10.1996
(51) Int. Cl.: F23G 5/14, F23G 5/08, F23G 5/00, F23L 7/00

(54) **Verfahren und Vorrichtung zur integrierten Entsorgung von Filterstäuben in thermischen Behandlungsanlagen**
Method and apparatus for integrated filter dust disposal in thermal treatment plants
Procédé et appareil pour l'élimination intégrée des poussières de filtrage dans des installations de traitement thermique

(30) Priorität: 26.10.1995 DE 19539946
(43) Veröffentlichungstag der Anmeldung: 02.05.1997
(73) Patentinhaber: Linde AG, 65189 Wiesbaden (DE)
(72) Erfinder: Lissack, Wilfried, Dipl.-Ing., 82049 Pullach (DE); Schöne, Holger, 85579 Neubiberg (DE); Müller, Frank-Michael, Dr.-Ing., 90473 Nürnberg (DE); Rückel, Hans-Georg, 90765 Fürth (DE); Hopf, Norbert, Dipl.-Ing. (FH), 92353 Postbauer-Heng (DE)
(74) Vertreter: Kasseckert, Rainer

(56) Entgegenhaltungen:
- EP-A- 0 192 025
- EP-A- 0 392 054
- EP-A- 0 770 821
- DE-A- 3 512 810
- DE-A- 4 021 362
- DE-A- 4 026 245
- DE-A- 4 107 200
- DE-A- 4 225 483
- US-A- 5 370 067
- W SCHUMACHER, JA GUGAT: "VERFAHREN ZU THERMISCHEN INERTISIERUNG VON MVA RUCKSTANDEN" WASSER, LUFT UND BODEN, Mai 1994, MAINZ (DE), Seiten 99-101, XP000611258

## Beschreibung

Die Erfindung betrifft ein Verfahren zur thermischen Behandlung von Stoffen in einer thermischen Behandlungsstufe, wobei Abgase entstehen, die Stäube enthalten, welche in einer nachgeschalteten Staubabscheidestufe vom Abgas abgetrennt werden, sowie eine Vorrichtung zur Durchführung des Verfahrens.

Bei der thermischen Behandlung von Stoffen z. B. in Müllverbrennungsanlagen oder Vergasungsanlagen entstehen neben festen oder schmelzflüssigen Verbrennungsprodukten und Abgas üblicherweise auch Flugstäube. Da diese Flugstäube hochkontaminiert sein können, müssen sie vom Abgas abgetrennt und entsorgt werden. Herkömmlicherweise wird das von der thermischen Behandlungsstufe, die beispielsweise als herkömmliche Müllverbrennungsanlage mit Rostfeuerung ausgebildet sein kann, abgezogene Abgas einem nachgeschalteten Staubabscheider zugeführt. Hierfür kommt z. B. ein Elektroabscheider in Betracht. Die im Staubabscheider abgetrennten Flugstäube werden einer thermischen Entsorgung zugeführt, während das Abgas einer Rauchgasreinigung unterzogen wird.

In "WLB Wasser, Luft und Boden, 5/1994 Seite 99 bis 101" ist ein solches Müllverbrennungsverfahren beschrieben, wobei die Entsorgung der Flugstäube in einer der Staubabscheidung nachgeschalteten Schmelzwanne oder einem Lichtbogenofen geschieht. In der Schmelzwanne oder dem Lichtbogenofen werden sowohl die in der Müllverbrennungsanlage anfallenden Verbrennungsrückstände als auch die im Staubabscheider abgetrennten Flugstäube eingeschmolzen und in ein glasartiges Produkt überführt. Die Schmelzwanne oder der Lichtbogenofen befinden sich außerhalb der Müllverbrennungsanlage und sind über Fördereinrichtungen mit der Müllverbrennungsanlage und dem Staubabscheider verbunden.

Durch die separate Einschmelzung der Flugstäube und der in der Müllverbrennungsanlage anfallenden Verbrennungsrückstände in einer baulich von der Müllverbrennungsanlage getrennten Schmelzwanne oder einem Lichtbogenofen verringert sich der Gesamtwirkungsgrad der thermischen Behandlung der Stoffe, wodurch sich die Wirtschaftlichkeit des Gesamtverfahrens verschlechtert. Außerdem erfordert die bauliche Trennung der einzelnen Behandlungsschritte erhöhte Investitionskosten.

Bekannt sind außerdem, beispielsweise aus der Druckschrift DE 41 07 200 A, Verfahren zur thermischen Abfallbehandlung mit schmelzflüssigem Schlackeabzug und einer Zuführung der aus dem Abgas abgetrennten Stäube in eine (Hochtemperatur-) Brennkammer.

Der vorliegenden Erfindung liegt die Aufgabe zugrunde, ein Verfahren der eingangs genannten Art sowie eine Vorrichtung zur Durchführung des Verfahrens zur Verfügung zu stellen, die eine wirtschaftliche Entsorgung der Stäube ermöglichen.

Diese Aufgabe wird verfahrensseitig erfindungsgemäß dadurch gelöst, daß die vom Abgas abgetrennten Stäube mit mindestens einem glas- und/oder basalt- und/oder keramikbildende Substanzen enthaltenden Zusatzsstoff vermischt werden und die Mischung zur thermischen Behandlungsstufe zurückgeführt und direkt in die Flamme eines mit technisch reinem Sauerstoff oder einem einen höheren Sauerstoffanteil als Luft aufweisenden Gas betriebenen, in der thermischen Behandlungsstufe angeordneten, Brenners und/oder mindestens einer mit technisch reinem Sauerstoff oder einem einen höheren Sauerstoffanteil als Luft aufweisenden Gas beaufschlagten, in der thermischen Behandlungsstufe endenden Lanze eingebracht wird, wobei ein Verbrennungsgas und schmelzflüssige Verbrennungspartikel entstehen, die anschließend durch Abkühlung in eine glasartige oder basaltartige oder keramikartige Masse überführt werden.

Mit dem erfindungsgemäßen Verfahren wird erreicht, daß die Stäube dort entsorgt werden, wo sie entstanden sind. Die Erfindung liefert also ein vorbildliches Beispiel für produktionsintegrierten Umweltschutz.

Voraussetzung für ein erfolgreiches Einschmelzen der Stäube in der thermischen Behandlungsstufe ist, daß sie mit mindestens einem glas- und/oder basalt- und/oder keramikbildende Substanzen enthaltenden Zusatzstoff, vorzugsweise mit einem Mischungsverhältnis von Stäuben zu Zusatzstoff von 20 bis 40 zu 80 bis 60 Massen-% vermischt und anschließend direkt in die Flamme des Brenners und/oder der Lanze eingebracht werden. Als Zusatzstoffe sollten solche Substanzen verwendet werden, die selbständig brennbar sind und die gewünschten Produkteigenschaften gewärleisten. Dabei kommen vor allem Substanzen in Frage, die Silizium- und Aluminiumverbindungen enthalten. Besonders vorteilhaft sind heizwertarme Abfall- und/oder Reststoffe mit glas- und/oder basalt- und/oder keramikbildendem Ascheanteil.

Vorzugsweise werden die Stäube in der Flamme eines Feststoffbrenners, der zusätzlich zur üblichen Beheizung der thermischen Behandlungsstufe in der Behandlungsstufe angeordnet ist, bei Temperaturen von ca. 1.250 bis ca. 1.500° C, zweckmäßigerweise bei Umgebungsdruck, vollständig verbrannt. Zusätzlich oder alternativ kann in der thermischen Behandlungszone mindestens eine Sauerstofflanze enden, über die Sauerstoff oder ein sauerstoffangereichertes Gas an die Stäube herangeführt wird.

In der thermischen Behandlungsstufe herrschen ohnehin sehr hohe Temperaturen, bei Müllverbrennungsanlagen z. B. üblicherweise Temperaturen von über 1.200°C. Da der Brenner und/oder die Lanze zudem bevorzugt so in die heißen Zonen der thermischen Behandlungsstufe eingebaut wird, daß auch in der Umgebung der Flamme des Brenners und/oder der Lanze hohe Temperaturen herrschen, ist eine vollständige Einschmelzung der Stäube gewährleistet. Die schmelzflüssigen Verbrennungspartikel werden nicht mit dem Verbrennungsgasstrom ausgetragen, sondern gelangen nach Abkühlung in die Zone der herkömmlichen festen Verbrennungsprodukte (Asche, Schlacke).

Für die Einschmelzung der Stäube reicht ein kleiner mit Sauerstoff oder einem sauerstoffangereicherten Gas betriebener Brenner aus, wodurch eine gravierende Verschiebung des Temperaturprofils in der thermischen Behandlungsstufe ausgeschlossen wird. Aufgrund des Einsatzes von Sauerstoff oder eines sauerstoffangereicherten Gases entstehen nur geringe Abgasvolumenströme bei hohen Verbrennungstemperaturen. Dies bedeutet, daß die Reinigung der von der thermischen Behandlungsstufe abgezogenen Abgase durch die integrierte Staubeinschmelzung in der thermischen Behandlungsstufe kaum zusätzlich belastet wird.

Da die glasbildenden Reaktionen direkt in der Flamme stattfinden, werden im Vergleich zu herkömmlicherweise direkt oder indirekt beheizten Schmelzöfen sehr viel höhere Umsätze erzielt. Dabei wird durch den Einsatz von technischem Sauerstoff oder einem mit Sauerstoff angereicherten Gas, insbesondere sauerstoffangereicherter Luft, die Einhaltung der erforderlichen hohen Temperaturen gewährleistet. Der technische Sauerstoff wird zweckmäßigerweise in einem Luftzerleger oder einer Druckwechseladsorptionsanlage (PSA-Anlage) vor Ort hergestellt oder in einem Vorratstank bereit gestellt.

Aufgrund ausgeprägter Turbulenzen in der Flamme und im Umkreis der Flamme können solche Stoffe, die nicht in die Schmelze eingebunden werden, sehr viel besser abgetrennt werden, als dies bei direkt oder indirekt beheizten Schmelzöfen möglich wäre. Durch die mit dem erfindungsgemäßen Verfahren erreichte weitgehende Abtrennung dieser nichtglasbildenden Substanzen, zu denen insbesondere Anionen, wie Fluorid, Chlorid und Sulfat sowie flüchtige Metalle wie Cadmium, Zink und Quecksilber gehören, wird eine sehr hohe Produktreinheit des Glases ermöglicht. Durch die erreichte, ausgezeichnete Produktqualität werden die Verwertungsmöglichkeiten deutlich verbessert.

Durch die Verwendung von technisch reinem Sauerstoff oder eines mit Sauerstoff angereicherten Gases und den Einsatz eines Feststoffbrenners können auch energiearme Zusatzstoffe zur selbstständigen Einschmelzung in der Flamme ohne Zufuhr zusätzlicher Brennstoffe verwendet werden.

Insbesondere eignen sich hierfür trockene Klärschlämme, die ohnehin entsorgt werden müssen. Die für die Einschmelzung der Stäube erforderliche Energie kann ausschließlich aus der Klärschlammverbrennung gewonnen werden. Eine zusätzliche Zufuhr eines weiteren Brennstoffes zum Brenner ist nach Beendigung der Anfahrphase energetisch nicht erforderlich. Der Klärschlamm weist glasbildende Substanzen in ausreichender Menge auf, um auch bei Rückständen aus Sonderabfallverbrennungsanlagen, die wenig glasbildende Substanzen enthalten, ein glasartiges Produkt mit hoher Qualität herstellen zu können. Zusätzliche Emissionen werden beim Einsatz von Klärschlämmen als Zusatzstoffe vermieden, da die Klärschlämme zur Entsorgung zukünftig ohnehin verbrannt werden müssen.

Eine andere Möglichkeit besteht darin, trockene Pyrolyserückstände als Zusatzstoffe zu verwenden. Pyrolyserückstände weisen einen Heizwert auf, der für eine herkömmliche Verbrennung zu gering ist, der aber für das erfindungsgemäße Schmelzverfahren unter Einsatz des mit technischem Sauerstoff oder mit sauerstoffangereichertem Gas betriebenen Brenners völlig ausreichend ist. Außerdem enthalten Pyrolyserückstände genügend glasbildende Substanzen, damit aus den zu entsorgenden Abfällen ein uneingeschränkt verwertbares glasartiges Produkt hergestellt werden kann.

Auch unvollständig ausgebrannte Braunkohleaschen können als Zusatzstoffe eingesetzt werden. Braunkohleaschen sind in Bezug auf den Heizwert und den Gehalt an glasbildenden Substanzen mit Pyrolyserückständen vergleichbar.

Gemäß einer weiteren Variante des erfindungsgemäßen Verfahrens können auch der Rostdurchfall von Hausmüllverbrennungsanlagen oder fein zerkleinerte Schredderabfälle als Zusatzstoff verwendet werden.

Eine Weiterbildung des Erfindungsgedankens sieht vor, zusätzlich zu dem glasbildende und/oder basaltbildende und/oder keramikbildende Substanzen enthaltenden Zusatzstoff mindestens einen weiteren Zuschlagstoff, insbesondere Asbestabfall, in die Flamme des Brenners und/oder der Lanze einzubringen, der die Qualität der glasartigen Schmelze verbessert. Der Anteil dieses Zuschlagstoffes an der Mischung sollte bevorzugt 10 Massen-% nicht übersteigen.

Die Stäube und/oder Zusatzstoffe werden zweckmäßigerweise durch Einblasen mittels eines Gases in die Flamme des Brenners und/oder der Lanze eingebracht. Vorzugsweise werden stickstoffarme Gase verwendet, wodurch eine zu starke Stickoxidbildung vermieden wird. Es kann auch ein Brenngas, insbesondere Erdgas, Propan oder Butan eingesetzt werden.

Gemäß einer Weiterbildung des Erfindungsgedankens wird verunreinigtes Gas z. B. aus Deponien oder schadstoffbelastete Abluft z. B. aus Tankanlagen zum Einblasen der Stäube und/oder Zusatzstoffe in die Flamme eingesetzt. Derartige Gase müssen ohnehin entsorgt werden, so daß durch eine gleichzeitige Behandlung mit den Stäuben zwei Entsorgungsprobleme bzw. bei Verwendung von zu entsorgenden Stoffen als Zusatzstoffen, wie z. B. Klärschlämmen oder Pyrolyserückständen, sogar drei Entsorgungsprobleme gleichzeitig gelöst werden können.

Zum Einblasen der Stäube und/oder Zusatzstoffe in die Flamme des Brenners und/oder der Lanze wird bevorzugt eine Dispergier- und Dosiereinrichtung verwendet, wie sie in der DE 42 25 483 C2 beschrieben ist.

Gemäß einer besonders bevorzugten Ausführungsform der Erfindung werden die Stäube in dem Bereich der thermischen Behandlungsstufe in die Flamme des Brenners und/oder der Lanze eingebracht, wo die zu behandelnden Stoffe in die thermische Behandlungsstufe eingegeben werden.

Eine Vorrichtung zur Durchführung des Verfahrens weist eine thermische Behandlungseinrichtung auf, die mindestens eine Zuführung für zu behandelnde Stoffe und mindestens eine Abführung für behandelte Stoffe in flüssiger und/oder schmelzflüssiger und/oder fester Form sowie mindestens eine Abgasableitung besitzt, wobei die Abgasableitung mit einer nachgeschalteten Staubabscheideeinrichtung verbunden ist, die mindestens eine Ableitung für abgetrennte Stäube und mindestens eine Ableitung für staubfreies oder staubreduziertes Abgas aufweist, die gegebenenfalls mit einer Abgasreinigungseinheit in Verbindung steht.

Vorrichtungsseitig wird die gestellte Aufgabe dadurch gelöst, daß die Ableitung für die abgetrennten Stäube zur thermischen Behandlungseinrichtung zurückgeführt ist und mit einem innerhalb der thermischen Behandlungseinrichtung angeordneten Brenner und/oder mindestens einer innerhalb der thermischen Behandlungseinrichtung endenden Lanze in Verbindung steht, der bzw. die eine mit einer Versorgungseinrichtung für technisch reinen Sauerstoff oder ein einen höheren Sauerstoffanteil als Luft aufweisendes Gas verbundene Sauerstoffzuleitung aufweist, und daß in die Ableitung für die abgetrennten Stäube eine mit einem Vorratsbehälter für einen heizwertarmen Abfall- oder Reststoff mit glas- und/oder basalt- und/oder keramikbildendem Ascheanteil, insbesondere trockenen Klärschlamm und/oder trockenen Pyrolyserückstand und/oder unvollständig ausgebrannte Braunkohleasche und/oder fein zerkleinerte Schredderabfälle, in Verbindung stehende Zuleitung mündet.

Die thermische Behandlungseinrichtung ist vorzugsweise als Verbrennungsanlage ausgebildet. Zweckmäßigerweise weist die Verbrennungsanlage eine Rostfeuerung auf. Beispielsweise kann die Verbrennungsanlage als konventionelle Müllverbrennungsanlage ausgebildet sein, die nach dem Dampf-Kraft-Prozeß arbeitet.

Vorzugsweise ist der Brenner in Nähe der Zuführung für die zu behandelnden Stoffe angeordnet und/oder die Lanze endet in Nähe der Zuführung für die zu behandelnden Stoffe.

Gemäß einer Weiterbildung des Erfindungsgedankens mündet in die Ableitung für die abgetrennten Stäube zusätzlich eine mit einem Vorratsbehälter für einen weiteren Zuschlagsstoff, insbesondere Asbestabfall, in Verbindung stehende Zuleitung.

Das erfindungsgemäße Verfahren und die zur Durchführung des Verfahrens vorgesehene Vorrichtung eignen sich zur Behandlung von allen denkbaren Filterstäuben, die in thermischen Behandlungsstufen anfallen. Ganz besonders ist die Erfindung für die Behandlung von Flugstäuben aus Sondermüllverbrennungsanlagen geeignet. Derartige Rückstände weisen hohe Schadstoffkonzentrationen auf und können mit herkömmlichen Verglasungsverfahren nur mit erhöhtem Aufwand behandelt werden.

Mit dem vorgeschlagenen Verfahren sind eine Reihe von Vorteilen verbunden. Durch den Einsatz von technischem Sauerstoff oder von mit Sauerstoff angereichertem Gas wird der in der thermischen Behandlungsstufe erzeugte Abgasvolumenstrom nur unwesentlich vergrößert. Außerdem ist nach Beendigung der Anfahrphase keine Zufuhr eines weiteren Brennstoffes zusätzlich zu den Zusatzstoffen energetisch erforderlich. Zusätzliche Emissionen werden verhindert, da bevorzugt solche Zusatzstoffe verwendet werden, die ohnehin entsorgt werden müssen. Da die basalt- bzw. glasbildenden Reaktionen direkt in der Flamme stattfinden, werden gegenüber konventionellen Schmelzofenbeheizungen deutlich höhere Umsatzraten erzielt. Durch Verwendung einer einfachen, wenig störanfälligen Anlagentechnik werden auch die Investitionskosten gering gehalten. Auswahl und Qualität der entstehenden glasartigen Produkte kann auf einfache Weise durch Variation des Mengenverhältnisses von Stäuben und Zusatzstoffen sowie geeignete Wahl dieser Zuschlagsstoffe und gegebenenfalls weiterer Zusatzstoffe bestimmt werden. Durch Integration der Staubeinschmelzung in die thermische Behandlungsanlage, insbesondere in den Feuerungsraum einer Müllverbrennungsanlage, ergeben sich wesentliche Energieeinsparungen gegenüber herkömmlicherweise verwendeten separaten Schmelzwannen zur Staubeinschmelzung. Darüberhinaus werden Investitionskosten in erheblichen Umfang eingespart.

Die erfindungsgemäße Vorrichtung kann auf einfache Weise in bereits bestehende Anlagen zur thermischen Behandlung von Stoffen, insbesondere in herkömmliche Müllverbrennungsanlagen, nachträglich eingebaut werden. Für eine Nachrüstung bestehender Anlagen eignen sich ganz besonders Müllverbrennungsanlagen, die eine Rostfeuerung aufweisen und nach dem Dampf-Kraft-Prozeß arbeiten. Die Erfindung kann aber auch z. B. in einem Drehrohr einer Sondermüllverbrennungsanlage oder einem thermischen Kraftwerk zur Stromerzeugung eingesetzt werden.

Im folgenden soll die Erfindung an Hand eines in einer Figur schematisch dargestellten Ausführungsbeispiels näher erläutert werden:

In der Figur ist das Fließschema einer Müllverbrennungsanlage mit integrierter Filterstaubentsorgung dargestellt.

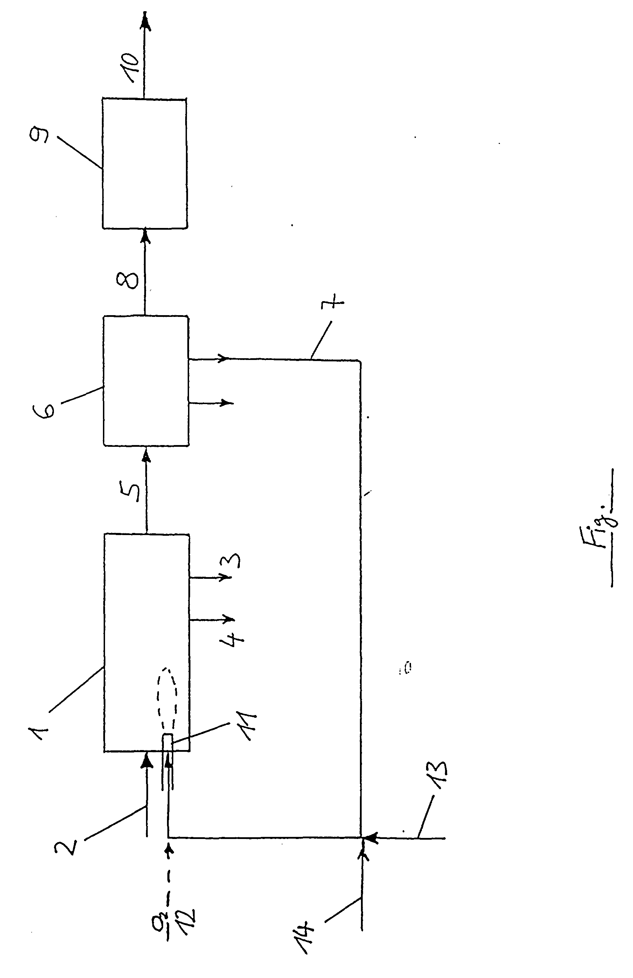

In Figur 1 ist ein Feuerungsraum 1 einer Müllverbrennungsanlage gezeigt, die nach dem üblichen Dampf-Kraft-Prozeß arbeitet. Über eine Zuführung 2 wird zu verbrennender Abfall, insbesondere Sonderabfall, dem Feuerungsraum 1 der Müllverbrennungsanlage zugeführt. Der Feuerungsraum 1 der Müllverbrennungsanlage weist eine in der Figur nicht dargestellte Rostfeuerung auf. Bei der Verbrennung der Abfälle im Feuerungsraum 1 entstehen feste und/oder schmelzflüssige Verbrennungspartikel, die sich in einem der Abfallzuführung 2 abgewandten Teil des Feuerungsraums 1 als Schlacke ablagern. Die Schlacke wird über einen Abzug 3 aus dem Feuerungsraum 1 abgeführt. Bei der Verbrennung der Abfallstoffe im Feuerungsraum 1 entstehende Verbrennungsabgase werden über eine Abgasleitung 5 einem Elektroabscheider 6 zugeführt. Im Elektroabscheider 6 werden Filterstäube vom Abgas abgetrennt und über eine Leitung 7 abgeführt. Das staubfreie oder zumindest staubreduzierte Abgas wird über eine Abgasleitung 8 zu einer Rauchgasreinigungseinrichtung 9 weitergeleitet. Schließlich verläßt das gereinigte Abgas über Leitung 10 die Anlage.

Die vom Abgas abgetrennten Filterstäube werden über die Leitung 7 zum Feuerungsraum 1 der Müllverbrennungsanlage zurückgeführt. Auf der Abfalleintrittsseite des Feuerungsraumes 1 ist ein Feststoffbrenner 11 angeordnet. Der Feststoffbrenner 11 wird mit technisch reinem Sauerstoff, der in einem nichtdargestellten Flüssigsauerstofftank bereitgestellt und über eine Sauerstoffleitung 12 dem Brenner zugeführt wird, versorgt. Über eine Leitung 13 wird den Filterstäuben trockener Klärschlamm mit einem Trockensubstanzgehalt von ca. 95 % zugemischt. Außerdem wird über Leitung 14 ein weiterer Zuschlagstoff, nämlich Asbestabfall, den Filterstäuben zugesetzt. Auf diese Weise wird eine Mischung hergestellt, die aus 30 Massen-% Filterstaub, 10 Massen-% Asbestabfall und 60 Massen-% Klärschlamm besteht. Diese Mischung wird in der Flamme des sauerstoffbetriebenen Feststoffbrenners 11 bei einer Temperatur von ca. 1.350 °C und Umgebungsdruck innerhalb des Feuerungsraumes 1 der Müllverbrennungsanlage vollständig verbrannt. Dabei entstehen schmelzflüssige Verbrennungspartikel und Verbrennungsabgas, das den Abgasvolumenstrom aus dem Feuerungsraum 1 nur unwesentlich erhöht. Die schmelzflüssigen Verbrennungspartikel lagern sich in einem kühlen Teil des Feuerungsraumes 1 der Müllverbrennungsanlage ab und werden durch Abkühlen in eine glasartige Masse überführt. Die in den Filterstäuben und den Zusatzstoffen enthaltenen Schadstoffe sind in den schmelzflüssigen Verbrennungspartikeln gelöst und werden beim Übergang zur basalt- bzw. glasartigen Masse fest in die Struktur eingebunden. Die basalt- bzw. glasartige Masse wird über eine Ableitung 4 aus dem Feuerungsraum 1 gemeinsam mit den anderen festen Verbrennungsprodukten abgezogen und kann zumindest einer Entsorgung z. B. in einer Deponie, bei entsprechender Gestaltung der Feuerungsraumbedingungen auch einer Verwertung zugeführt werden.

## Patentansprüche

1. Verfahren zur thermischen Behandlung von Stoffen in einer thermischen Behandlungsstufe (1), wobei Abgase entstehen, die Stäube enthalten, welche in einer nachgeschalteten Staubabscheidestufe (6) vom Abgas abgetrennt werden, **dadurch gekennzeichnet, daß** die vom Abgas abgetrennten Stäube mit mindestens einem glas- und/oder basalt- und/oder keramikbildende Substanzen enthaltenden Zusatzstoff vermischt werden und die Mischung zur thermischen Behandlungsstufe (1) zurückgeführt und direkt in die Flamme eines mit technisch reinem Sauerstoff oder einem einen höheren Sauerstoffanteil als Luft aufweisenden Gas betriebenen, in der thermischen Behandlungsstufe (1) angeordneten, Brenners (11) und/oder mindestens einer mit technisch reinem Sauerstoff oder einem einen höheren Sauerstoffanteil als Luft aufweisenden Gas beaufschlagten, , in der thermischen Behandlungsstufe endenden Lanze eingebracht wird, wobei ein Verbrennungsgas und schmelzflüssige Verbrennungspartikel entstehen, die anschließend durch Abkühlung in eine glasartige oder basaltartige oder keramikartige Masse überführt werden.

2. Verfahren nach Anspruch 1, **dadurch gekennzeichnet, daß** die Stäube in der Flamme des Brenners (11) und/oder der Lanze bei Temperaturen von ca. 1.250 bis ca. 1.500 °C vollständig verbrannt werden.

3. Verfahren nach Anspruch 1 oder 2, **dadurch gekennzeichnet, daß** als Zusatzstoff ein heizwertarmer Abfall- oder Reststoff mit glas- und/oder basalt- und/oder keramikbildendem Ascheanteil, insbesondere trockener Klärschlamm und/oder trockener Pyrolyserückstand und/oder unvollständig ausgebrannte Braunkohleasche und/oder fein zerkleinerte Schredderabfälle, eingesetzt wird.

4. Verfahren nach einem der Ansprüche 1 bis 3, **dadurch gekennzeichnet, daß** die Stäube mit dem Zusatzstoff zu einer Mischung mit einem Mischungsverhältnis von Stäuben zu Zusatzstoff von 20 bis 40 zu 80 bis 60 Massen-% vermischt werden.

5. Verfahren nach einem der Ansprüche 1 bis 4, **dadurch gekennzeichnet, daß** der Mischung mindestens ein weiterer Zuschlagsstoff, insbesondere Asbestabfall, vorzugsweise in einer Menge von bis zu 10 Massen-%, beigemengt wird, der die Qualität der glas- und/oder basalt- und/oder keramikartigen Masse verbessert.

6. Verfahren nach einem der Ansprüche 1 bis 5, **dadurch gekennzeichnet, daß** die Stäube mittels eines stickstoffarmen Gases in die Flamme des Brenners (11) und/oder der Lanze eingebracht werden.

7. Verfahren nach einem der Ansprüche 1 bis 6, **dadurch gekennzeichnet, daß** die Stäube mittels eines zu entsorgenden Gases in die Flamme des Brenners (11) und/oder der Lanze eingebracht werden.

8. Verfahren nach einem der Ansprüche 1 bis 7, **dadurch gekennzeichnet, daß** die Stäube im Aufgabenbereich der Stoffe in der thermischen Behandlungsstufe (1) in die Flamme des Brenners (11) und/oder der Lanze eingebracht werden.

9. Vorrichtung zur Durchführung des Verfahrens nach Anspruch 1 mit einer thermischen Behandlungseinrichtung (1), die mindestens eine Zuführung (2) für zu behandelnde Stoffe und mindestens eine Abführung (3) für behandelte Stoffe in flüssiger und/oder schmelzflüssiger und/oder fester Form sowie mindestens eine Abgasableitung (5) aufweist, wobei die Abgasableitung (5) mit einer nachgeschalteten Staubabscheideeinrichtung (6) verbunden ist, die mindestens eine Ableitung (7) für abgetrennte Stäube und mindestens eine Abführung (8) für staubfreies oder staubreduziertes Abgas aufweist, die gegebenenfalls mit einer Abgasreinigungseinheit (9) in Verbindung steht, **dadurch gekennzeichnet, daß** die Ableitung (7) für die abgetrennten Stäube zur thermischen Behandlungseinrichtung (1) zurückgeführt ist und mit einem innerhalb der thermischen Behandlungseinrichtung (1) angeordneten Brenner (11) und/oder mit mindestens einer innerhalb der thermischen Behandlungseinrichtung (1) endenden Lanze in Verbindung steht, der bzw. die eine mit einer Versorgungseinrichtung für technisch reinen Sauerstoff oder ein einen höheren Sauerstoffanteil als Luft aufweisendes Gas verbundene Sauerstoffzuleitung (12) aufweist, und daß in die Ableitung (7) für die abgetrennten Stäube eine mit einem Vorratsbehälter für einen heizwertarmen Abfall- oder Reststoff mit glas- und/oder basalt- und/oder keramikbildendem Ascheanteil, insbesondere trockenen Klärschlamm und/oder trockenen Pyrolyserückstand und/oder unvollständig ausgebrannte Braunkohlenasche und/oder fein zerkleinerte Schredderabfälle, in Verbindung stehende Zuleitung (13) mündet.

10. Vorrichtung nach Anspruch 9, **dadurch gekennzeichnet, daß** in die Ableitung (7) für die abgetrennten Stäube eine mit einem Vorratsbehälter für einen weiteren Zuschlagsstoff, insbesondere Asbestabfall, in Verbindung stehende Zuleitung (14) mündet.

11. Vorrichtung nach Anspruch 9 oder 10, **dadurch gekennzeichnet, daß** die thermische Behandlungseinrichtung (1) als Verbrennungsanlage ausgebildet ist.

12. Vorrichtung nach Anspruch 11, **dadurch gekennzeichnet, daß** die Verbrennungsanlage eine Rostfeuerung aufweist.

13. Vorrichtung nach einem der Ansprüche 10 bis 12, **dadurch gekennzeichnet, daß** der Brenner (11) in Nähe der Zuführung (2) für die zu behandelnden Stoffe angeordnet ist und/oder die Lanze in Nähe der Zuführung (2) für die zu behandelnden Stoffe endet.

## Claims

1. Process for the heat treatment of substances in a heat treatment stage (1), in which off-gases are formed, containing dusts which are separated from the off-gas in a downstream dust separation stage (6), **characterized in that** the dusts which have been separated from the off-gas are mixed with at least one additive which contains glass- and/or basalt- and/or ceramic-forming substances, and the mixture is returned to the heat treatment stage (1) and is introduced directly into the flame of a burner (11), which is operated with technically pure oxygen or a gas which has an oxygen content which is higher than that of air and is arranged in the heat treatment stage (1), and/or of at least one lance, which is acted on by technically pure oxygen or a gas which has a higher oxygen content than that of air and ends in the heat treatment stage, a combustion gas and molten combustion particles being formed, which are then converted into a glass-like or basalt-like or ceramic-like material by cooling.

2. Process according to Claim 1, **characterized in that** the dusts are completely burnt in the flame of the burner (11) and/or of the lance, at temperatures from approx. 1250 to approx. 1500°C.

3. Process according to Claim 1 or 2, **characterized in that** a waste or remainder material, which has a low calorific value and a fraction of glass- and/or basalt- and/or ceramic-forming ash, in particular dry clarification sludge and/or dry pyrolysis residue and/or incompletely burnt brown coal ash and/or finely comminuted shredder waste, is used as the additive.

4. Process according to one of Claims 1 to 3, **characterized in that** the dusts are mixed with the additive to form a mixture with a mixing ratio of dusts to additive of 20 to 40:80 to 60% by mass.

5. Process according to one of Claims 1 to 4, **characterized in that** at least one further additive, in particular asbestos waste, is admixed with the mixture, preferably in an amount of up to 10% by mass, this additive improving the quality of the glass-like and/or basalt-like and/or ceramic-like material.

6. Process according to one of Claims 1 to 5, **characterized in that** the dusts are introduced into the flame of the burner (11) and/or of the lance by means of a low-nitrogen gas.

7. Process according to one of Claims 1 to 6, **characterized in that** the dusts are introduced into the flame of the burner (11) and/or of the lance by means of a gas which is to be disposed of.

8. Process according to one of Claims 1 to 7, **characterized in that** the dusts are introduced into the flame of the burner (11) and/or of the lance in the charging region of the substances in the heat treatment stage (1).

9. Apparatus for carrying out the process according to Claim 1, having a heat treatment device (1), which has at least one feed (2) for substances which are to be treated and at least one discharge (3) for treated substances in liquid and/or molten and/or solid form, as well as at least one off-gas outlet line (5), the off-gas outlet line (5) being connected to a downstream dust separation device (6), which has at least one outlet line (7) for dusts which have been separated out and at least one discharge (8) for dust-free or reduced-dust off-gas, which discharge, if appropriate, is connected to an off-gas cleaning unit (9), **characterized in that** the outlet line (7) for the dusts which have been separated out returns to the heat treatment device (1) and is connected to a burner (11), which is arranged inside the heat treatment device (1), and/or to at least one lance which ends inside the heat treatment device (1), which burner or lance has an oxygen feed line (12), which is connected to a device for supplying technically pure oxygen or a gas which has a higher oxygen content than that of air, and **in that** a feed line (13), which is connected to a reservoir for a waste or remainder material which has a low calorific value and a proportion of glass- and/or basalt- and/or ceramic-forming ash, in particular dry clarification sludge and/or dry pyrolysis residue and/or incompletely burnt brown coal ash and/or finely comminuted shredder waste, opens out into the outlet line (7) for the dusts which have been separated out.

10. Apparatus according to Claim 9, **characterized in that** a feed line (14) which is connected to a reservoir for a further additive, in particular asbestos waste, opens out into the outlet line (7) for the dusts which have been separated out.

11. Apparatus according to Claim 9 or 10, **characterized in that** the heat treatment device (1) is designed as a combustion installation.

12. Apparatus according to Claim 11, **characterized in that** the combustion installation has a grate firing.

13. Apparatus according to one of Claims 10 to 12, **characterized in that** the burner (11) is arranged in the vicinity of the feed (2) for the substances which are to be treated, and/or the lance ends in the vicinity of the feed (2) for the substances which are to be treated.

## Revendications

1. Procédé pour le traitement thermique de matières dans un étage de traitement thermique (1), dans lequel il se forme des gaz brûlés qui contiennent des poussières, qui sont séparées des gaz brûlés dans un étage de précipitation des poussières (6) qui est installé à la suite, **caractérisé en ce que** les poussières séparées des gaz brûlés sont mélangées à au moins une matière d'addition contenant des substances formant du verre et/ou du basalte et/ou de la céramique et le mélange est renvoyé à l'étage de traitement thermique (1) et introduit directement dans la flamme d'un brûleur (11) disposé dans l'étage de traitement thermique (1) et fonctionnant avec de l'oxygène techniquement pur ou avec un gaz présentant une teneur en oxygène supérieure à celle de l'air et/ou d'au moins une lance se terminant dans l'étage de traitement thermique et alimentée avec de l'oxygène techniquement pur ou avec un gaz présentant une teneur en oxygène supérieure à celle de l'air, donnant ainsi lieu à la formation d'un gaz de combustion et de particules de combustion fondues, qui sont ensuite transformées par refroidissement en une masse de nature vitreuse ou basaltique ou céramique.

2. Procédé suivant la revendication 1, **caractérisé en ce que** les poussières sont complètement brûlées dans la flamme du brûleur (11) et/ou de la lance à des températures d'environ 1250 à environ 1500°C.

3. Procédé suivant la revendication 1 ou 2, **caractérisé en ce que** l'on utilise comme matière d'addition une matière de déchet ou une matière résiduelle à faible pouvoir calorifique présentant une teneur en cendres formant du verre et/ou du basalte et/ou de la céramique, en particulier de la boue de curage sèche et/ou un résidu de pyrolyse sec et/ou des cendres de lignite incomplètement brûlées et/ou des déchets de concassage finement broyés.

4. Procédé suivant l'une quelconque des revendications 1 à 3, **caractérisé en ce que** les poussières sont mélangées avec la matière d'addition en un mélange présentant une proportion de mélange des poussières à la matière d'addition de 20 jusqu'à 40 à 80 jusqu'à 60 % en masse.

5. Procédé suivant l'une quelconque des revendications 1 à 4, **caractérisé en ce qu'**au moins une autre matière d'addition, en particulier des déchets d'amiante, est ajoutée au mélange de préférence en une quantité atteignant jusqu'à 10 % en masse, qui améliore la qualité de la masse de nature vitreuse et/ou basaltique et/ou céramique.

6. Procédé suivant l'une quelconque des revendications 1 à 5, **caractérisé en ce que** les poussières sont introduites dans la flamme du brûleur (11) et/ou de la lance au moyen d'un gaz pauvre en azote.

7. Procédé suivant l'une quelconque des revendications 1 à 6, **caractérisé en ce que** les poussières sont introduites dans la flamme du brûleur (11) et/ou de la lance au moyen d'un gaz à éliminer.

8. Procédé suivant l'une quelconque des revendications 1 à 7, **caractérisé en ce que** les poussières sont introduites dans la flamme du brûleur (11) et/ou de la lance dans la zone de chargement des matières dans l'étage de traitement thermique (1).

9. Dispositif pour la mise en oeuvre du procédé suivant la revendication 1 avec un dispositif de traitement thermique (1), qui présente au moins une arrivée (2) pour des matières à traiter et au moins une sortie (3) pour des matières traitées sous forme liquide et/ou fondue et/ou solide ainsi qu'au moins une conduite d'évacuation de gaz brûlés (5), dans lequel la conduite d'évacuation de gaz brûlés (5) est raccordée à un dispositif de précipitation des poussières (6) installé à la suite, qui présente au moins une conduite d'évacuation (7) pour des poussières séparées et au moins une sortie (8) pour des gaz brûlés sans poussières ou à teneur en poussières réduite, qui est éventuellement en communication avec un dispositif de lavage des gaz brûlés (9), **caractérisé en ce que** la conduite d'évacuation (7) pour les poussières séparées est renvoyée au dispositif de traitement thermique (1) et est en communication avec un brûleur (11) disposé à l'intérieur du dispositif de traitement thermique (1) et/ou avec au moins une lance se terminant à l'intérieur du dispositif de traitement thermique (1), qui présente une conduite d'arrivée d'oxygène (12) raccordée à un dispositif de distribution d'oxygène techniquement pur ou d'un gaz présentant une teneur en oxygène supérieure à celle de l'air, et **en ce que** dans la conduite d'évacuation (7) pour les poussières séparées débouche une conduite d'arrivée (13) qui se trouve en communication avec un réservoir de stockage d'une matière de déchet ou d'une matière résiduelle à faible pouvoir calorifique présentant une teneur en cendres formant du verre et/ou du basalte et/ou de la céramique, en particulier de la boue de curage sèche et/ou un résidu de pyrolyse sec et/ou des cendres de lignite incomplètement brûlées et/ou des déchets de concassage finement broyés.

10. Dispositif suivant la revendication 9, **caractérisé en ce que** dans la conduite d'évacuation (7) pour les poussières séparées débouche une conduite d'arrivée (14) se trouvant en communication avec un réservoir de stockage d'une autre matière d'addition, en particulier de déchets d'amiante.

11. Dispositif suivant la revendication 9 ou 10, **caractérisé en ce que** le dispositif de traitement thermique (1) est constitué par une installation de combustion.

12. Dispositif suivant la revendication 11, **caractérisé en ce que** l'installation de combustion présente un foyer à grille.

13. Dispositif suivant l'une quelconque des revendications 10 à 12, **caractérisé en ce que** le brûleur (11) est disposé à proximité de l'arrivée (2) destinée aux matières à traiter et/ou la lance se termine à proximité de l'arrivée (2) destinée aux matières à traiter.
